# EUROPEAN PATENT APPLICATION

(11) **EP 4 075 579 A1**
(43) Date of publication of application: **19.10.2022**
(21) Application number: 20905151.5
(22) Date of filing: 16.12.2020
(51) Int. Cl.: H01M 50/20

(54) **BATTERY ASSEMBLY FOR USE IN TERMINAL DEVICE, AND TERMINAL DEVICE HAVING SAME**

(30) Priority: 24.12.2019 CN 201911348524
(71) Applicant: GUANGDONG OPPO MOBILE TELECOMMUNICATIONS CORP., LTD., Dongguan, Guangdong 523860 (CN)
(72) Inventor: XIE, Hongbin, Dongguan, Guangdong 523860 (CN); ZHANG, Jun, Dongguan, Guangdong 523860 (CN)
(74) Representative: Thorniley, Peter
(86) International application number: PCT/CN2020/136910
(87) International publication number: WO 2021/129492

(57) **Abstract**

Provided are a battery assembly (100) and a terminal device (1000). The battery assembly (100) includes a battery protection board (1), a first battery cell (21), and a second battery cell (22). A positive electrode tab of the first battery cell (21) is disposed on a side of the first battery cell (21) close to the battery protection board (1) and connected to the battery protection board (1). A negative electrode tab of the first battery cell (21) is disposed on a side of the first battery cell (21) away from the battery protection board (1). A negative electrode tab of the second battery cell (22) is disposed on a side of the second battery cell (22) close to the battery protection board (1) and connected to the battery protection board (1). A positive electrode tab of the second battery cell (22) is disposed on a side of the second battery cell (22) facing away from the battery protection board (1). The negative electrode tab of the first battery cell (21) is electrically connected to the positive electrode tab of the second battery cell (22).

## Description

### CROSS-REFERENCE TO RELATED APPLICATIONS

The present application is based on and claims priority to Chinese Patent Application No. 201911348524.9 filed on December 24, 2019, the entire content of which is incorporated herein by reference.

### FIELD

The present disclosure relates to the field of electronic technologies, and more particularly, to a battery assembly for a terminal device, and a terminal device having the battery assembly.

### BACKGROUND

For rechargeable batteries known in the related art, the internal space of the terminal device is often insufficient if multiple cells are connected in series or in parallel, thereby limiting related optimization requirements on the terminal device in terms of structure, charging, and the like.

### SUMMARY

The present disclosure is provided to solve at least one of the problems in the related art. To this end, the present disclosure provides a battery assembly for a terminal device. The battery assembly is advantageous for space optimization and charging.

The present disclosure further provides a terminal device having the battery assembly.

A battery assembly for the terminal device according to a first aspect of the present disclosure includes a battery protection board, and a plurality of battery cells disposed on a same side of the battery protection board. The plurality of battery cells at least includes a first battery cell and a second battery cell. A positive electrode tab of the first battery cell is disposed on a side of the first battery cell close to the battery protection board and is connected to the battery protection board. A negative electrode tab of the first battery cell is disposed on a side of the first battery cell that is away from the battery protection board. A negative electrode tab of the second battery cell is disposed on a side of the second battery cell close to the battery protection board and is connected to the battery protection board. A positive electrode tab of the second battery cell is disposed on a side of the second battery cell that is away from the battery protection board. The negative electrode tab of the first battery cell is electrically connected to the positive electrode tab of the second battery cell.

A battery assembly for the terminal device according to a second aspect of the present disclosure includes a plurality of battery cells sequentially arranged in a first direction. The first direction is perpendicular to a thickness direction of each of the plurality of battery cells. The plurality of battery cells at least includes a first battery cell and a second battery cell. Two sides of the first battery cell or the second battery cell in a second direction are a first side and a second side, respectively. The second direction intersects with the first direction. A positive electrode tab of the first battery cell is disposed on the first side of the first battery cell in the second direction and is configured to be connected to a circuit board of the terminal device. A negative electrode tab of the first battery cell is disposed on the second side of the first battery cell in the second direction. A negative electrode tab of the second battery cell is disposed on the first side of the second battery cell in the second direction and is configured to be connected to the circuit board of the terminal device. A positive electrode tab of the second battery cell is disposed on the second side of the second battery cell in the second direction. The negative electrode tab of the first battery cell is electrically connected to the positive electrode tab of the second battery cell.

A terminal device according to a third aspect of the present disclosure includes a battery assembly for the terminal device according to any one of the embodiments of the first aspect or second aspect of the present disclosure. In the terminal device provided by the present disclosure, by using the battery assembly for the terminal device according to any one of the embodiments of the first aspect or the second aspect, an overall performance of the terminal device can be improved.

Additional aspects and advantages of embodiments of the present disclosure will be given in part in the following descriptions; or they will become apparent in part from the following descriptions; or they can be learned from the practice of the embodiments of the present disclosure.

### BRIEF DESCRIPTION OF DRAWINGS

FIG. 1 is a schematic diagram of a battery assembly according to an embodiment of the present disclosure.
FIG. 2 is a schematic diagram of a battery assembly according to an embodiment of the present disclosure.
FIG. 3 is a schematic diagram of a battery assembly according to an embodiment of the present disclosure.
FIG. 4 is a schematic diagram of a battery assembly according to an embodiment of the present disclosure.
FIG. 5 is a schematic diagram of a battery assembly according to an embodiment of the present disclosure.
FIG. 6 is a schematic diagram of a terminal device according to an embodiment of the present disclosure.
FIG. 7 is a schematic diagram of a terminal device according to an embodiment of the present disclosure.
FIG. 8 is a schematic diagram of a battery assembly according to an embodiment of the related art.

### Reference numerals:

terminal device 1000;
battery assembly 100; battery protection board 1; battery cell 2; metal piece 3;
first battery cell 21; second battery cell 22; third battery cell 23;
circuit board 200; and flexible circuit board 300.

### DESCRIPTION OF EMBODIMENTS

Embodiments of the present disclosure will be described in detail below, and examples of the embodiments are illustrated in the accompanying drawings, throughout which the same or similar reference numerals refer to the same or similar elements or elements having the same or similar functions. The embodiments described below with reference to the accompanying drawings are illustrative and intended to explain the present disclosure and should not be construed as limiting the present disclosure.

The following provides several different embodiments or examples of different implementations of the present disclosure. To simplify contents of the present disclosure, configurations and arrangements in specific examples are described below, and they are merely illustrative and are not intended to limit the present disclosure. Moreover, reference numerals and/or characters may repeat in the various examples for the purpose of simplicity and clarity, and the repetition does not dictate a relation between the various embodiments and/or configurations discussed. In addition, the present disclosure provides examples of various specific processes and materials, but those of ordinary skill in the art may think of the applicability of other processes and/or the use of other materials.

A battery assembly 100 for a terminal device 1000 according to an embodiment of the first aspect of the present disclosure is described with reference to the drawings.

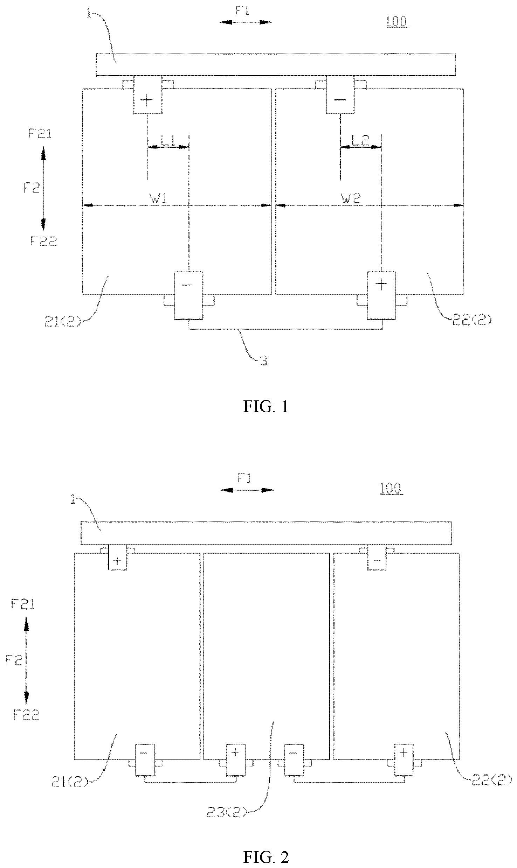

As illustrated in FIG. 1, the battery assembly 100 may include a battery protection board 1, and a plurality of battery cells 2. The plurality of battery cells 2 is disposed on a same side of the battery protection board 1, or in other words, the battery protection board 1 has the plurality of battery cells 2 disposed on the same side thereof. The plurality of battery cells 2 at least includes a first battery cell 21 and a second battery cell 22. That is, the total number of the plurality of battery cells 2 is at least two, i.e., one first battery cell 21 and one second battery cell 22 are at least provided therein. In some embodiments, the number of the battery cells 2 may be only two, i.e., only including one first battery cell 21 and one second battery cell 22. In other embodiments, the number of the battery cells 2 may be more than two, i.e., including other battery cells 2 in addition to the first battery cell 21 and the second battery cell 22.

As illustrated in FIG. 1, a positive electrode tab of the first battery cell 21 is disposed on a side of the first battery cell 21 close to the battery protection board 1 and is connected to the battery protection board 1. A negative electrode tab of the first battery cell 21 is disposed on a side of the first battery cell 21 facing away from the battery protection board 1. A negative electrode tab of the second battery cell 22 is disposed on a side of the second battery cell 22 close to the battery protection board 1 and is connected to the battery protection board 1. A positive electrode tab of the second battery cell 22 is disposed on a side of the second battery cell 22 facing away from the battery protection board 1. The negative electrode tab of the first battery cell 21 is electrically connected to the positive electrode tab of the second battery cell 22. They may be directly connected through a metal piece 3, as illustrated in FIG. 1; or they may be indirectly connected by other battery cells 2 among the plurality of battery cells 2, as illustrated in FIG. 2 to FIG. 5.

Thus, in the battery assembly 100 provided by the present disclosure, since the positive electrode tab of the first battery cell 21 is disposed on the side of the first battery cell 21 close to the battery protection board 1 and the negative electrode tab of the first battery cell 21 is disposed on the side of the first battery cell 21 facing away from the battery protection board 1, a distance L1, in an arrangement direction of the first battery cell 21 and the second battery cell 22 (i.e., in a first direction F1 illustrated in FIG. 1), between the positive electrode tab and the negative electrode tab of first battery cell 21 is not limited, and thus a dimension W1 of the first battery cell 21 in this direction (the first direction F1 illustrated in FIG. 1) can be reduced. Similarly, since the positive electrode tab of the second battery cell 22 is disposed on the side of the second battery cell 22 facing away from the battery protection board 1 and the negative electrode tab of the second battery cell 22 is disposed on the side of the second battery cell 22 close to the battery protection board 1, a distance L2, in an arrangement direction of the first battery cell 21 and the second battery cell 22 (i.e., the first direction F1 illustrated in FIG. 1), between the positive electrode tab and the negative electrode tab of the second battery cell 22 is not limited, and thus a dimension W2 of the second battery cell 22 in the direction (the first direction F1 illustrated in FIG. 1) can be reduced. In addition, a gap between the first battery cell 21 and the second battery cell 22 can be shortened.

In this way, more battery cells 2 can be accommodated in the terminal device 1000, and thus a battery life of the terminal device 1000 can be improved; or, without providing more battery cells 2, more space in the terminal device 1000 can be saved, so that more functional elements can be disposed in the terminal device 1000 to provide more functions on the premise of ensuring a compact structure of the terminal device 1000. Moreover, since the positive electrode tab of the first battery cell 21 and the negative electrode tab of the second battery cell 22 are both connected to the battery protection board 1 and located at the side close to the battery protection board 1, a current transmission path can be shortened, a charging temperature can be lowered, and a flexible circuit board 300 or other conductive materials for introducing transmission current can be omitted, thereby reducing cost and simplifying structure, and improving current transmission efficiency and charging speed to a certain extent.

Further, it can be understood that, regarding the terminal device 1000, the function and concept of the battery protection board 1 are well known to those skilled in the art and thus will be described briefly. The battery protection board 1 may be an integrated circuit board 200 for mainly protecting a re-chargeability of the battery (generally, a lithium battery). The reason why the rechargeable lithium battery needs protection is determined by its own characteristics. The lithium battery, due to its material, cannot be overcharged, over-discharged, subjected to overcurrent, short-circuited, and charged or discharged at ultra-high temperature. Therefore, the lithium battery components of the lithium battery are always accompanied with a protection board having a sampling resistor and a current fuse.

Further, for the battery assembly 100 provided by the present disclosure, even if an outer encapsulation layer is provided, a design requirement on the outer encapsulation layer is as low as the design requirement on an encapsulation layer of a common single battery cell 2. Moreover, for the battery assembly 100 provided by the present disclosure, the technology requirement on the processing of each battery cell 2 is very low and the modification thereof is very small, so that the application difficulty is very low, which is conducive to a promotion of application. The battery assembly 100 provided by the present disclosure may have no outer encapsulation layer.

In some embodiments of the present disclosure, the first battery cell 21 and the second battery cell 22 are sequentially arranged in the first direction F1. The distance L1, in the first direction F1, between the positive electrode tab and the negative electrode tab of the first battery cell 21 is zero, and the distance L2, in the first direction F1, between the positive electrode tab and the negative electrode tab of the second battery cell 22 is also zero. Therefore, a size W1 of the first battery cell 21 in the first direction F1 and a size W2 of the second battery cell 22 in the first direction F1 can be reduced more effectively. In this way, more battery cells 2 can be accommodated in the terminal device 1000, and thus a battery life of the terminal device 1000 can be further improved; or, without providing more battery cells 2, more space in the terminal device 1000 can be saved, so that more functional elements can be disposed in the terminal device 1000 to provide more functions on the premise of ensuring a compact structure of the terminal device 1000. The present disclosure is not limited thereto. In other embodiments of the present disclosure, L1 and L2 may also be greater than zero, for example, any value ranging from 0 to 3mm, to reduce the size of the battery cell 2 in the first direction F1.

In some embodiments of the present disclosure, as illustrated in FIG. 1, the negative electrode tab of the first battery cell 21 and the positive electrode tab of the second battery cell 22 may be directly connected in series through a metal piece 3. In this way, the structure may be simplified, and the cost may be reduced. In other embodiments of the present disclosure, as illustrated in FIG. 2, the plurality of battery cells 2 further includes a third battery cell 23. The third battery cell 23 is disposed between the first battery cell 21 and the second battery cell 22. That is, the first battery cell 21 and the second battery cell 22 are arranged on two sides of the third battery cell 23. A positive electrode tab and a negative electrode tab of the third battery cell 23 are both located on a side of the third battery cell 23 facing away from the battery protection board 1 and are connected in series between the negative electrode tab of the first battery cell 21 and the positive electrode tab of the second battery cell 22. In this way, at least three battery cells 2 can be simply and effectively connected in series.

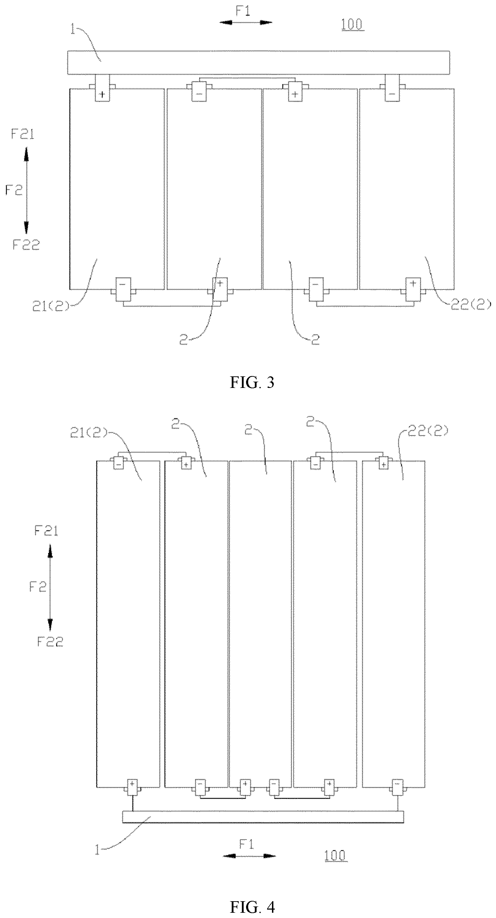

The present disclosure is not limited to these. In the embodiments of the present disclosure, when the total number of the plurality of battery cells 2 is an even number greater than three and the plurality of battery cells 2 is sequentially connected in series, every two battery cells 2, which are spaced by two adjacent battery cells, may be sequentially connected in series and arranged in such a manner that the positive and negative electrode tabs thereof are arranged as those of the first battery cell 21 and the second battery cell 22. For example, as illustrated in FIG. 3, two battery cells 2 at two ends of the plurality of battery cells 2 in the first direction F1 may be the first battery cell 21 and the second battery cell 22, respectively. When the total number of the plurality of battery cells 2 is an odd number greater than three and the plurality of battery cells 2 is sequentially connected in series, the battery cell 2 located in a middle position of the plurality of battery cells 2 may be disposed in the same manner as the third battery cell 23, i.e., the positive and negative electrode tabs thereof are disposed on the same side, and then the plurality of battery cells 2 is sequentially connected in series, for example, as illustrated in FIG. 4, and two battery cells 2 at two ends of the plurality of battery cells 2 in the first direction F1 may be the first battery cell 21 and the second battery cell 22, respectively.

In some embodiments of the present disclosure, the two battery cells 2 at two ends of the plurality of battery cells 2 in the first direction F1 may be the first battery cell 21 and the second battery cell 22, respectively, so as to facilitate a series connection of the plurality of battery cells 2. The present disclosure is not limited thereto, and the plurality of battery cells 2 may also be connected in series and/or in parallel. Once the connection manner of the plurality of battery cells 2 is determined, a person skilled in the art can easily think of the method of arranging the electrode tabs of the respective battery cells 2 with reference to the above description, which will not be elaborated herein.

In some embodiments of the present disclosure, the plurality of battery cells 2 is sequentially arranged in the first direction F1, and the first direction F1 is perpendicular to a thickness direction of each battery cell 2. That is, the plurality of battery cells 2 is not sequentially arranged in the thickness direction of any one battery cell 2, i.e., the direction in which the plurality of battery cells 2 is sequentially arranged is not the thickness direction of any one battery cell 2. In this way, the thickness of the entire battery assembly 100 can be reduced to meet structural design requirements of the terminal device 1000, and thus the terminal device 1000 can be designed to be ultra-thin.

For example, as illustrated in FIG. 1 to FIG. 4, the first direction F1 may be a width direction of each battery cell 2, and the battery protection board 1 is located on the same side of each battery cell 2 in a length direction (e.g., the second direction F2 as illustrated). That is, the plurality of battery cells 2 may be sequentially arranged along the width direction of each battery cell 2. Therefore, the size of the battery assembly 100 in the first direction F1 is fixed, and the size of the battery assembly 100 in the second direction F2 may be increased as needed. In this way, a total charge capacity of the battery assembly 100 can be effectively increased. When the battery assembly is applied to the terminal device 1000 such as a smartphone and a tablet computer, the battery assembly can have a good applicable value.

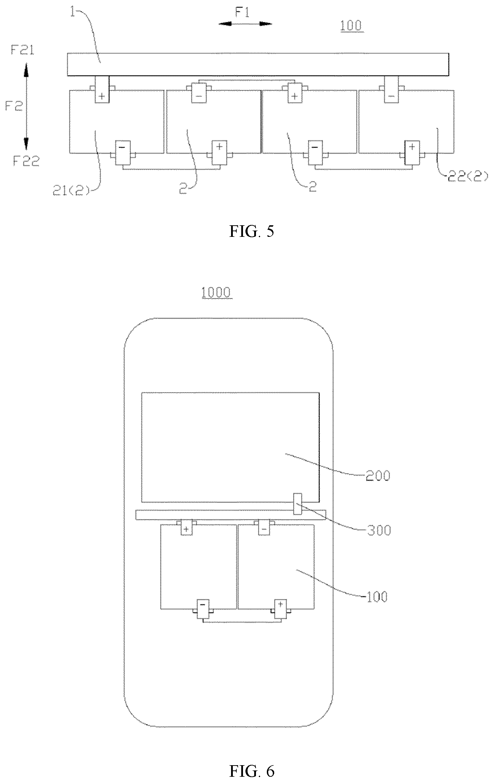

The present disclosure is not limited thereto, in other embodiments of the present disclosure, the plurality of battery cells 2 may also be sequentially arranged along the length direction of each battery cell 2, for example, as illustrated in FIG. 5. In this case, when the size of the battery assembly 100 in the width direction (the second direction F2 illustrated in FIG. 5) of each battery cell 2 is fixed, the size of the battery assembly 100 in the first direction F1 can be increased as needed, so that a total charge capacity of the battery assembly 100 can be effectively increased. In this way, when the battery assembly is applied to an intelligent wearable device, such as a smart watch, a smart belt, a smart arm ring, and the like, the battery assembly may have a good applicable value. It should be noted that the second direction F2 is a direction perpendicular to the first direction F1 and perpendicular to the thickness of each battery cell 2.

In some embodiments of the present disclosure, a structural shape and a structural size of a cell body of each of the plurality of battery cells 2 are the same, which facilitates the unified production and assembly and improves the production efficiency. The present disclosure is not limited thereto, and the structural shape and the structural size of the battery cell body of each battery cell 2 may also be different to meet different production requirements.

A battery assembly 100 for a terminal device 1000 according to an embodiment of the second aspect of the present disclosure is described with reference to the drawings.

As illustrated in FIG. 1, the battery assembly 100 may include the plurality of battery cells 2 sequentially arranged in a first direction F1. The first direction F1 is perpendicular to a thickness direction of each battery cell 2. That is, the plurality of battery cells 2 is not sequentially arranged along the thickness direction of any one of the plurality of battery cells 2, i.e., the direction in which the plurality of battery cells 2 is sequentially arranged is not the thickness direction of any one of the plurality of battery cells 2. In this way, the thickness of the entire battery assembly 100 can be reduced to meet the structural design requirements of the terminal device 1000, so that the terminal device 1000 can be designed to be ultra-thin.

As illustrated in FIG. 1, the plurality of battery cells 2 at least includes the first battery cell 21 and the second battery cell 22. That is, the total number of the plurality of battery cells 2 is at least two, and at least one first battery cell 21 and one second battery cell 22 are provided therein. In some embodiments, the number of the battery cells 2 may be two, i.e., including only one first battery cell 21 and one second battery cell 22. In other embodiments, the number of the battery cells 2 may be more than two, i.e., including other battery cells 2 in addition to the first battery cell 21 and the second battery cell 22.

As illustrated in FIG. 1, the second direction F2 intersects with (e.g., may intersect with an acute angle, an obtuse angle, or be perpendicular to) the first direction F1. Two sides of the second direction F2 are a first side F21 and a second side F22, respectively. The positive electrode tab of the first battery cell 21 is disposed on the first side F21 of the first battery cell 21 in the second direction F2 and is adapted to be (directly or indirectly) connected to the circuit board 200 of the terminal device 1000. The negative electrode tab of the first battery cell 21 is disposed on the second side F22 of the first battery cell 21 in the second direction F2. The negative electrode tab of the second battery cell 22 is disposed on the first side F21 of the second battery cell 22 in the second direction F2 and is adapted to be (directly or indirectly) connected to the circuit board 200 of the terminal device 1000. The positive electrode tab of the second battery cell 22 is disposed on the second side F22 of the second battery cell 22 in the second direction F2. The negative electrode tab of the first battery cell 21 and the positive electrode tab of the second battery cell 22 are electrically connected with each other. They may be directly connected through the metal piece 3, as illustrated in FIG. 1, or they may be indirectly connected through other battery cells 2 in the plurality of battery cells 2, as illustrated in FIG. 2 to FIG. 5.

Thus, in the battery assembly 100 provided by the present disclosure, since the positive electrode tab and the negative electrode tab of the first battery cell 21 are respectively located on both sides of the first battery cell 21 in the second direction F2, the distance L1, in the arrangement direction of the first battery cell 21 and the second battery cell 22 (the first direction F1 illustrated in FIG. 1), between the positive electrode tab and the negative electrode tab of the first battery cell 21 is not limited, and thus the dimension W1 of the first battery cell 21 in the direction (the first direction F1 illustrated in FIG. 1) can be reduced. Similarly, since the positive electrode tab and the negative electrode tab of the second battery cell 22 are respectively located on both sides of the second battery cell 22 in the second direction F2, the distance L2, in the arrangement direction of the first battery cell 21 and the second battery cell 22 (the first direction F1 illustrated in FIG. 1), between the positive electrode tab and the negative electrode tab thereof is not limited, and thus the dimension W2 of the second battery cell 22 in the direction (the first direction F1 illustrated in FIG. 1) can be reduced. Further, the gap between the first battery cell 21 and the second battery cell 22 can be shortened.

Therefore, more battery cells 2 can be accommodated in the terminal device 1000, and thus a battery life of the terminal device 1000 can be improved; or, without providing more battery cells 2, more space in the terminal device 1000 can be saved, so that more functional elements can be disposed in the terminal device 1000 to provide more functions on the premise of ensuring a compact structure of the terminal device 1000. Moreover, the positive electrode tab of the first battery cell 21 and the negative electrode tab of the second battery cell 22 are both connected to the circuit board 200 of the terminal apparatus 1000 and located on the same side in the second direction F2. In this way, a charging temperature can be lowered, and a flexible circuit board 300 or other conductive materials for introducing transmission current can be omitted, thereby reducing cost and simplifying structure, and improving current transmission efficiency and charging speed to a certain extent.

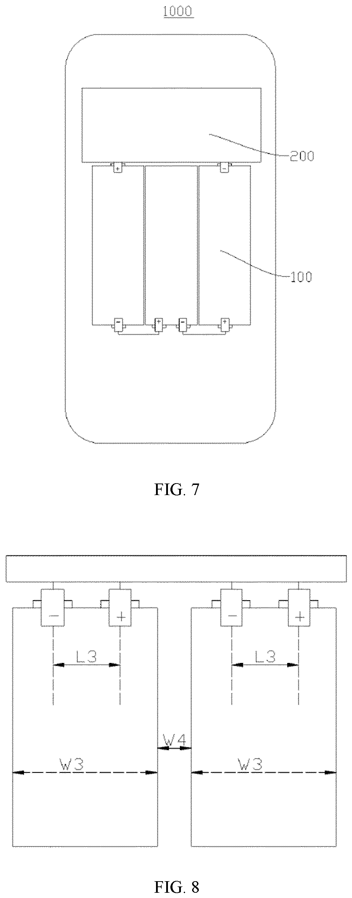

It should be noted that the terminal device 1000 to which the battery assembly 100 according to the embodiments of the second aspect of the present disclosure is applied may have the battery protection board 1 or may have no battery protection board 1. For example, as illustrated in FIG. 7, when the terminal device 1000 does not have the battery protection board 1, a circuit board 200 (e.g., a main board or a sub-board) of the terminal device 1000 may integrate functions of the battery protection board 1 and may be configured to directly connect to the positive electrode tab of the first battery cell 21 and the negative electrode tab of the second battery cell 22. When the terminal device 1000 has the battery protection board 1, as illustrated in FIG. 6, the positive electrode tab of the first battery cell 21 and the negative electrode tab of the second battery cell 22 may be directly connected to the battery protection board 1, or they may be indirectly connected to the circuit board 200 (e.g., the main board or the sub-board) of the terminal device 1000 through an electrical connection between the battery protection board 1 and the circuit board 200. In addition, it should be noted that, in the embodiments of the second aspect of the present disclosure, the battery protection board 1 may be a long strip-shaped plate, and it may also be in other shapes, but it is not required that the plurality of battery cells 2 is located on the same side of the battery protection board 1.

Further, in the battery assembly 100 provided by the present disclosure, even if the outer encapsulation layer is provided, the design requirement for the outer encapsulation layer is as low as the design requirement for an encapsulation layer of a common single battery cell 2, and moreover, the technology requirement for the processing of each battery cell 2 is very low, the modification is very small, so that the application difficulty is very low, which is conducive to a promotion of application. The battery assembly 100 provided by the present disclosure may have no outer encapsulation layer.

In some embodiments of the present disclosure, the first battery cell 21 and the second battery cell 22 are sequentially arranged in the first direction F1. The distance L1, in the first direction F1, between the positive electrode tab and the negative electrode tab of the first battery cell 21 is zero, and the distance L2, in the first direction F1, between the positive electrode tab and the negative electrode tab of the second battery cell 22 is also zero. Therefore, the size W1 of the first battery cell 21 in the first direction F1 and the size W2 of the second battery cell 22 in the first direction F1 can be reduced more effectively. In this way, more battery cells 2 can be accommodated in the terminal device 1000, and thus a battery life of the terminal device 1000 can be improved; or, without providing more battery cells 2, more space in the terminal device 1000 can be saved, so that more functional elements can be disposed in the terminal device 1000 to provide more functions on the premise of ensuring a compact structure of the terminal device 1000. The present disclosure is not limited thereto. In other embodiments of the present disclosure, L1 and L2 may also be greater than zero, for example, any value ranging from 0 to 3mm, to reduce the size of the battery cell 2 in the first direction F1.

In some embodiments of the present disclosure, as illustrated in FIG. 1, the negative electrode tab of the first battery cell 21 and the positive electrode tab of the second battery cell 22 may be directly connected in series through the metal piece 3. In this way, the structure may be simplified, and the cost may be reduced. In other embodiments of the present disclosure, as illustrated in FIG. 2, the plurality of battery cells 2 further includes a third battery cell 23. The third battery cell 23 is disposed between the first battery cell 21 and the second battery cell 22. That is, the first battery cell 21 and the second battery cell 22 are arranged on two sides of the third battery cell 23. A positive electrode tab and a negative electrode tab of the third battery cell 23 are both located on the second side F22 of the third battery cell 23 in the second direction F2 and are connected in series between the negative electrode tab of the first battery cell 21 and the positive electrode tab of the second battery cell 22. In this way, at least three battery cells 2 can be simply and effectively connected in series.

The present disclosure is not limited thereto. In the embodiments of the present disclosure, when the total number of the plurality of battery cells 2 is an even number greater than three and the plurality of battery cells 2 is sequentially connected in series, every two battery cells 2, which are spaced by two adjacent battery cells, may be provided with the positive electrode tab and the negative electrode tab in the same manner of the first battery cell 21 and the second battery cell 22, and then are sequentially connected in series (for example, as illustrated in FIG. 3). When the total number of the plurality of battery cells 2 is an odd number greater than three and the plurality of battery cells 2 is sequentially connected in series, the battery cell 2 located in a middle position of the plurality of battery cells 2 may be disposed in the same manner as the third battery cell 23, i.e., the positive and negative electrode tabs thereof are disposed on the same side, and then the plurality of battery cells 2 is sequentially connected in series (for example, as illustrated in FIG. 4), and the two battery cells 2 at two ends of the plurality of battery cells 2 in the first direction F1 may be the first battery cell 21 and the second battery cell 22, respectively.

In some embodiments of the present disclosure, the two battery cells 2 at two ends of the plurality of battery cells 2 in the first direction F1 may be the first battery cell 21 and the second battery cell 22, respectively, so as to facilitate a series connection of the plurality of battery cells 2. The present disclosure is not limited thereto, and the plurality of battery cells 2 may also be connected in series and/or in parallel. Once the connection manner of the plurality of battery cells 2 is determined, a person skilled in the art can easily think of the method of arranging the electrode tabs of each battery cell 2 with reference to the above description, which will not be elaborated herein.

For example, as illustrated in FIG. 1 to FIG. 4, the first direction F1 may be a width direction of each battery cell 2, and the battery protection board 1 is located on the same side in a length direction (e.g., the second direction F2 illustrated in the figures) of each battery cell 2. That is, the plurality of battery cells 2 may be sequentially arranged in the width direction of each battery cell 2. Therefore, when the size of the battery assembly 100 in the first direction F1 is fixed, the size of the battery assembly 100 in the second direction F2 may be increased as needed. In this way, a total charge capacity of the battery assembly 100 can be effectively increased, and when the battery assembly is applied to the terminal device 1000 such as a smartphone and a tablet computer, the battery assembly may have a good applicable value.

The present disclosure is not limited thereto, in other embodiments of the present disclosure, the plurality of battery cells 2 may also be sequentially arranged along the length direction of each battery cell 2, for example, as illustrated in FIG. 5. In this case, when the size of the battery assembly 100 in the width direction (the second direction F2 illustrated in FIG. 5) of each battery cell 2 is fixed, the size of the battery assembly 100 in the first direction F1 can be increased as needed, so that a total charge capacity of the battery assembly 100 can be effectively increased. In this way, when the battery assembly is applied to an intelligent wearable device, such as a smart watch, a smart belt, a smart arm ring, and the like, the battery assembly may have a good applicable value. It should be noted that the second direction F2 is a direction perpendicular to the first direction F1 and perpendicular to the thickness of each battery cell 2.

In some embodiments of the present disclosure, a structural shape and a structural size of a battery cell body of each of the plurality of battery cells 2 are the same, which facilitates the unified production and assembly and improves the production efficiency. The present disclosure is not limited thereto, and the structural shape and the structural size of the battery cell body of each battery cell 2 may also be different to meet different production requirements.

A terminal device 1000 according to an embodiment of the third aspect of the present disclosure is described below.

As illustrated in FIG. 6, the terminal device 1000 according to an embodiment of the present disclosure includes the battery assembly 100 according to any one of the embodiments of the first aspect and second aspect of the present disclosure. It should be noted that the type of the terminal device 1000 according to the embodiment of the present disclosure is not limited, and the terminal device may be any device that has the battery assembly 100 disposed therein and can obtain current from the outside to charge the battery, for example, a mobile phone, a tablet computer, a computing device, an information display device, or the like. The terminal device 1000 to which the present disclosure is applied is described by taking a mobile phone as an example. For example, the mobile phone may include components such as a radio frequency circuit, a memory, an input unit, a wireless fidelity (WiFi) module, a display unit, a sensor, an audio circuit, a processor, a projection unit, a shooting unit, and a battery.

Therefore, more battery cells 2 can be accommodated in the terminal device 1000, and thus a battery life of the terminal device 1000 can be improved; or, without providing more battery cells 2, more space in the terminal device 1000 can be saved, so that more functional elements can be disposed in the terminal device 1000 to provide more functions on the premise of ensuring a compact structure of the terminal device 1000. In addition, the current transmission path can be shortened, a charging temperature can be lowered, and a flexible circuit board 300 or other conductive materials for introducing transmission current can be omitted, thereby reducing cost and simplifying structure, and improving current transmission efficiency and charging speed to a certain extent.

It should be noted that, a terminal device known in the related art is generally powered by a battery, for example, a lithium-ion battery, etc. With the increasingly higher functional requirements for the current terminal device, various requirements on the battery are also increasing continuously. For example, in some terminal devices such as mobile phones, a capacity value of the battery has been increased to about 5,000 mAh or even higher; a service cycle life of the battery has been increased from previous 500 times to 800 times, or even more than 1,000 times; and a capacity retention rate is still more than 80%. Due to a limited current energy density of the lithium-ion battery, the capacity of the battery is generally between 600 Wh and 800 Wh, and the maximum capacity of the battery can be merely about 5,000 mAh. Therefore, a charging speed of the battery is constantly improved, for example, a length of charging time is shorted from the previous 3 h to 90 min, or even about 30 min. The quick charge technologies can be generally divided into two ways, i.e., quick charge of high voltage and low current, and quick charge of low voltage and high current, based on the same charging power.

Generally speaking, in the process of quick charge, it is necessary to increase the charging current for the battery to speed up the charging speed, that is, a charging rate of the current battery is increased from the previous 0.7C to the current 1.5C or even 3.0C, where C is the charging rate. For example, for a battery cell of 3,000 mAh, the charging current of 1.5C is 4.5A, an increase of the charging current will also cause the increase of internal temperatures of the battery and the terminal device. However, it is difficult to improve the charging rate of the battery in the related art. For example, the maximum charging rate of the battery cell of the terminal device in the related art is 3C, and meanwhile, if the battery is charged with full charging rate, the current value is very high. For example, a battery cell of 4,000 mAh, if the battery is charged with the charging rate of 3C, the current value may reach 12A. On the one hand, it will increase the difficulty of selecting components, and on the other hand, such a large current may cause the battery to generate special heat in the charging process, which is very challenging for the safe use of the battery.

Therefore, charging solutions for use in the battery cells connected in series are proposed in the related art, which can increase the charging speed by reducing the charging current (doubling the voltage). However, although the dual-cell series connection mode can reduce the charging current and simultaneously ensure a high charging speed, Applicant has creatively found that, in the common dual-cell series connection, the positive electrode tab and the negative electrode tab of each battery cell are located on the same side of the battery cell, for example, the positive electrode tab and the negative electrode tab are both disposed on the side of each battery cell close to a main board, so that the positive electrode tab and the negative electrode tab of each battery cell are both located on the side facing away from a charging port.

Applicant found that such an arrangement in the related art has problems. On the one hand, the current path is too long to generate heat over overflowing. On the other hand, due to a limitation of the minimum distance between the positive electrode tab and the negative electrode tab, each battery cell has a minimum width limitation, such that a width of two battery cells cannot be set arbitrarily after being placed side by side, and the space in the middle of the two battery cells disposed side by side is also wasted. Especially, if more battery cells are needed, the width thereof is limited to a greater extent, and it is of a very important design requirement on a volume shape for the terminal device. Thus, the design of the battery cell limits the improvement of the whole charging speed to a great extent.

FIG. 8 is a schematic structural diagram of two battery cells connected in series in the related art. As illustrated in FIG. 8, a positive electrode tab and a negative electrode tab on the top of a battery cell has a certain distance L3. For sake of safety, the distance is generally not too small and is generally greater than 3mm, and thus a width, taking an insulating adhesive tape into consideration, has a lower limit, so that the width W3 of each battery cell has a minimum lower limit, i.e., it cannot be too small. Further, in order to avoid a short circuit of the positive and negative electrode tabs of two battery cells, a distance W4 between the two battery cells also has a minimum lower limit. Thus, the distance between the two battery cells cannot be too small, which results in a larger width of the whole battery. The problem becomes more serious as the number of battery cells increases.

In order to solve at least one of the above technical problems, the present disclosure proposes the battery assembly 100 according to the embodiments of the first aspect and the second aspect described above and the terminal device 1000 according to the embodiments of the third aspect. A battery assembly 100 according to a specific embodiment of the present disclosure is described, and the battery assembly 100 of the embodiment may be a specific embodiment of the battery assembly 100 mentioned in any of the embodiments of the first aspect, the second aspect, and the third aspect described above.

In the embodiment, the battery assembly 100 has a plurality of battery cells 2. Among them, the positive electrode tab and the negative electrode tab of at least two battery cells 2 are designed in such a manner that the positive electrode tab is disposed on one end and the negative electrode tab is disposed on the other end, the sequence of which is not limited. As can be seen from the drawings, the distance between the positive electrode tab and the negative electrode tab can be arbitrarily reduced or the positive electrode tab and the negative electrode tab can even overlap, and the positive electrode tab and the negative electrode tab are not located on the same side, such that the short circuit will not occur. In this way, the width of the battery cell 2 can be reduced to the maximal extent. During connection, electrode tabs at one end of the battery assembly 100 are directly connected in series or in parallel by using a common welding method such as a ultrasonic welding, a laser welding and the like, with connecting materials having a high conductivity, such as copper sheets, nickel sheets, aluminum sheets, and other materials, and then the positive electrode tab and the negative electrode tab at the other end of the battery assembly 100 are connected to the battery protection board 1, in order to achieve charge and discharge functions.

In addition, the plurality of battery cells 2 is not arranged according to a specific sequence, and the directions of the positive electrode tab and the negative electrode tab of each battery cell 2 can be interchanged. It is only required to ensure that the positive electrode and the negative electrode of each battery cell 2 are distributed at the upper end and the lower end of the battery cell 2, and the electrode tabs of at least two battery cells 2 on the same side of the battery are different in terms of positive and negative polarity.

In addition, for the connection mode of the battery cells 2 of an even number, FIG. 1 and FIG. 3 can be referred to. For a connection mode of the battery cells 2 of an odd number, in order to ensure that electrode tabs of at least two battery cells 2 at the same side of the battery are a positive electrode tab and a negative electrode tab, respectively, the positive electrode tab and the negative electrode tab of the middle battery cell 2 are disposed at the same side thereof, as illustrated in FIG. 2 and FIG. 4, it is ensured that the at least two battery cell 2 has the positive electrode tab and the negative electrode tab disposed at the same side of the battery, to ensure a connection with the battery protection board 1.

In addition, the positions of all the electrode tabs may be located on any electrode piece layer inside the battery cell 2, including but not limited to both ends of the electrode piece. That is, for a single battery cell 2, the electrode tabs can be placed on the respective electrode pieces in the following manners: electrode tabs on two ends, electrode tabs in the middle, multiple electrode tabs, and the like, which can be used in each battery cell 2 according to the embodiment of the present disclosure and is not limited herein.

In summary, in the battery assembly 100 of the above embodiments of the present disclosure, by disposing the positive electrode tab and the negative electrode tab of each of at least two battery cells 2 at different ends, the problem of size limitation caused by the plurality of battery cells 2 connected in series and parallel can be solved without excessively changing the design and production process of the battery cells 2, and meanwhile, the requirement of quick charge in the battery design process can be satisfied. In short, on one hand, an application space of the plurality of battery cells 2 will not excessively limited, and on the other hand, the battery energy density and production design are not significantly affected, which is beneficial to large-scale applications.

In short, in order to overcome the problem of insufficient internal space of the terminal device caused by the plurality of battery cells 2 connected in series or in parallel, the present disclosure provides the battery assembly 100, which can satisfy the requirement of quick charge for a battery design, and in which an application space of the battery cells 2 will not be excessively limited. The battery energy density and production design are not significantly affected, which is beneficial to large-scale applications.

Throughout this specification, reference term "an embodiment," "some embodiments," "an example," "a specific example," or "some examples," means that a particular feature, structure, material, or characteristic described in connection with the embodiment or example is included in at least one embodiment or example of the present disclosure. The above phrases throughout the specification are not necessarily referring to the same embodiment or example of the present disclosure. Furthermore, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although the embodiments of present disclosure have been illustrated and described above, those skilled in the art can understand that changes, modifications, alternatives, and variations can be made to these embodiments without departing from the principles and concept of the present disclosure.

## Claims

1. A battery assembly for a terminal device, the battery assembly comprising:
a battery protection board; and
a plurality of battery cells disposed on a same side of the battery protection board, wherein the plurality of battery cells at least comprises a first battery cell and a second battery cell, a positive electrode tab of the first battery cell being disposed on a side of the first battery cell close to the battery protection board and being connected to the battery protection board, a negative electrode tab of the first battery cell being disposed on a side of the first battery cell that is away from the battery protection board, a negative electrode tab of the second battery cell being disposed on a side of the second battery cell close to the battery protection board and being connected to the battery protection board, a positive electrode tab of the second battery cell being disposed on a side of the second battery cell that is away from the battery protection board, and the negative electrode tab of the first battery cell being electrically connected to the positive electrode tab of the second battery cell.

2. The battery assembly for the terminal device according to claim 1, wherein the plurality of battery cells further comprises a third battery cell disposed between the first battery cell and the second battery cell, a positive electrode tab and a negative electrode tab of the third battery cell being disposed on a side of the third battery cell that is away from the battery protection board and being connected in series between the negative electrode tab of the first battery cell and the positive electrode tab of the second battery cell.

3. The battery assembly for the terminal device according to claim 1, wherein the negative electrode tab of the first battery cell and the positive electrode tab of the second battery cell are directly connected in series through a metal piece.

4. The battery assembly for the terminal device according to any one of claims 1 to 3, wherein the first battery cell and the second battery cell are sequentially arranged in a first direction, wherein a distance, in the first direction, between the positive electrode tab and the negative electrode tab of the first battery cell is zero, and wherein a distance, in the first direction, between the positive electrode tab and the negative electrode tab of the second battery cell is zero.

5. The battery assembly for the terminal device according to any one of claims 1 to 4, wherein the plurality of battery cells is sequentially arranged in a first direction, the first direction being perpendicular to a thickness direction of each of the plurality of battery cells.

6. The battery assembly for the terminal device according to claim 5, wherein the first direction is a width direction of each of the plurality of battery cells, and wherein the battery protection board is disposed on a same side of the plurality of battery cells in a length direction of each of the plurality of battery cells.

7. A battery assembly for a terminal device, the battery assembly comprising:
a plurality of battery cells sequentially arranged in a first direction, the first direction being perpendicular to a thickness direction of each of the plurality of battery cells,
wherein the plurality of battery cells at least comprises a first battery cell and a second battery cell, wherein two sides of the first battery cell or the second battery cell in a second direction are a first side and a second side, respectively, the second direction intersecting with the first direction, a positive electrode tab of the first battery cell being disposed on the first side of the first battery cell in the second direction and being configured to be connected to a circuit board of the terminal device, a negative electrode tab of the first battery cell being disposed on the second side of the first battery cell in the second direction, a negative electrode tab of the second battery cell being disposed on the first side of the second battery cell in the second direction and being configured to be connected to the circuit board of the terminal device, a positive electrode tab of the second battery cell being disposed on the second side of the second battery cell in the second direction, and the negative electrode tab of the first battery cell being electrically connected to the positive electrode tab of the second battery cell.

8. The battery assembly for the terminal device according to claim 7, wherein the plurality of battery cells further comprises a third battery cell disposed between the first battery cell and the second battery cell, a positive electrode tab and a negative electrode tab of the third battery cell being disposed on the second side of the third battery cell in the second direction and being connected in series between the negative electrode tab of the first battery cell and the positive electrode tab of the second battery cell.

9. The battery assembly for the terminal device of claim 7, wherein the negative electrode tab of the first battery cell and the positive electrode tab of the second battery cell are directly connected in series through a metal piece.

10. The battery assembly for the terminal device according to any one of claims 7 to 9, wherein the first battery cell and the second battery cell are sequentially arranged in the first direction, wherein a distance, in the first direction, between the positive electrode tab and the negative electrode tab of the first battery cell is zero, and wherein a distance, in the first direction, between the positive electrode tab and the negative electrode tab of the second battery cell is also zero.

11. A terminal device, comprising the battery assembly for the terminal device according to any one of claims 1 to 10.
